# FASCICULE DE BREVET EUROPEEN

(11) **EP 1 033 046 B1**
(45) Date de publication et mention de la délivrance du brevet: **12.10.2005**
(21) Numéro de dépôt: 98955713.7
(22) Date de dépôt: 20.11.1998
(51) Int. Cl.: H04Q 7/30

(54) **STATION DE BASE PRIVEE POUR RADIOTELEPHONE MOBILE**
PRIVATE BASISSTATION FÜR MOBILFUNKTELEFON
PRIVATE BASE STATION FOR MOBILE PHONE

(30) Priorité: 24.11.1997 FR 9714717
(43) Date de publication de la demande: 06.09.2000
(73) Titulaire: NORTEL NETWORKS SA, 78280 Guyancourt Cedex 9 (FR)
(72) Inventeur: LUCIDARME, Thierry, F-78180 Montigny le Bretonneux (FR); VINCENT, Paul, F-92500 Rueil Malmaison (FR); DUPLESSIS, Philippe, F-92700 Colombes (FR)
(74) Mandataire: Loisel, Bertrand
(86) Numéro de dépôt international: PCT/FR1998/002490
(87) Numéro de publication internationale: WO 1999/027729

(56) Documents cités:
- WO-A-95/02927
- DE-A- 19 708 189
- GB-A- 2 309 357

## Description

La présente invention concerne un équipement téléphonique de type station de base de radiotéléphonie cellulaire.

L'opérateur d'un réseau de radiotéléphonie cellulaire répartit sur le territoire à couvrir les stations de base du réseau, dont les zones de couverture définissent les cellules. Ces stations de base sont reliées à d'autres infrastructures du service mobile pour l'acheminement des communications et le raccordement avec les réseaux filaires.

Il est parfois prévu que certains abonnés du réseau cellulaire puissent disposer à leur domicile, ou généralement dans un lieu privé, d'une station de téléphonie sans fil analogue à une station de base privée, directement raccordée à un réseau de télécommunication filaire. Lorsque la station mobile communique depuis le domicile de l'abonné, elle accède préférentiellement à cette station de base privée plutôt qu'à celles du réseau cellulaire. L'appel est donc acheminé par le réseau filaire et non par le réseau cellulaire. Ces dispositions permettent à l'abonné de substituer son combiné de radiotéléphonie au terminal filaire traditionnellement utilisé au domicile.

WO95/02927 décrit un système de radiocommunication utilisant un support de données amovible en liaison avec une station de base privée. Toutefois, ce support sert seulement à fournir des paramètres de fonctionnement à la station de base privée. Il ne permet pas d'échanger des informations entre cette station de base privée et une station mobile.

Un but de la présente invention est de faciliter l'emploi et la mise en place de telles stations de base privées.

L'invention propose ainsi un équipement téléphonique selon la revendication 1.

Le lecteur/enregistreur de données permet d'échanger entre le module d'identification d'abonné et l'équipement téléphonique formant station de base privée les paramètres nécessaires à l'interfonctionnement entre cette station de base et les stations mobiles, à savoir d'une part les paramètres permettant à la station mobile d'identifier l'équipement lorsqu'il le détecte par radio et d'assurer alors les opérations nécessaires vis-à-vis du réseau cellulaire, et d'autre part les paramètres permettant à l'équipement d'acheminer des appels entrants vers la station mobile.

L'usage de cette station de base privée n'est pas réservé à un seul abonné. Un abonné autre que le détenteur de l'équipement pourra s'inscrire auprès de cet équipement en lui présentant son module d'identification d'abonné. On peut également envisager que plusieurs modules d'abonnés soient inscrits simultanément pour pouvoir communiquer par l'intermédiaire de l'équipement.

Un autre avantage est que l'équipement peut être livré à l'usager indépendamment de la station mobile qu'il a pu acquérir auparavant, le lecteur/enregistreur ayant seulement à lire et à reprogrammer le module d'abonné qui lui est présenté.

L'invention propose en outre un procédé de contrôle de communications selon la revendication 16.

Un autre aspect de la présente invention se rapporte à un équipement téléphonique de typé station de base privée, comprenant une interface filaire pour le raccordement à un réseau de télécommunication filaire, et une interface air pour communiquer par radio avec des stations mobiles selon le mode de fonctionnement d'un type de réseaux cellulaires, dans lequel des communications téléphoniques mettant en jeu une station mobile située à portée radio de l'équipement peuvent être établies par l'intermédiaire du réseau filaire au moyen de l'interface filaire et de l'interface air, et dans lequel l'interface air est agencée pour émettre un signal de balise conformément au mode de fonctionnement du type de réseaux cellulaires, permettant sa détection par une station mobile située à portée radio de l'équipement, et pour cesser d'émettre le signal de balise pendant une communication établie par l'intermédiaire du réseau filaire et mettant en jeu une station mobile. Cet équipement comporte de préférence le lecteur/enregistreur de données défini ci-dessus.

Cet équipement a l'avantage de limiter les interférences radio qu'il provoque vis-à-vis du réseau cellulaire et/ou des autres équipements du même genre. Une solution simple est d'agencer l'interface air pour qu'elle occupe le canal physique du signal de balise pendant ladite communication mettant en jeu la station mobile.

D'autre part, si plusieurs stations mobiles sont susceptibles de communiquer par l'intermédiaire de la station de base privée (par exemple parce que leurs modules d'abonnés ont été présentés successivement dans le lecteur/enregistreur), le fait que l'une d'entre elles entre effectivement en communication provoque l'interruption du signal de balise et donc la perte de détection de l'équipement par la ou les autres stations mobiles. Ces dernières se localisent alors auprès du réseau cellulaire, de sorte qu'elles restent capables d'émettre ou de recevoir des appels malgré l'occupation de la ligne filaire à laquelle est raccordé l'équipement.

D'autres particularités et avantages de l'invention apparaîtront dans la description ci-après d'un exemple de réalisation non limitatif en référence aux dessins annexés, dans lesquels :
- la figure 1 est un schéma synoptique d'un équipement selon l'invention ;
- la figure 2 est un organigramme d'une procédure de configuration de l'équipement.

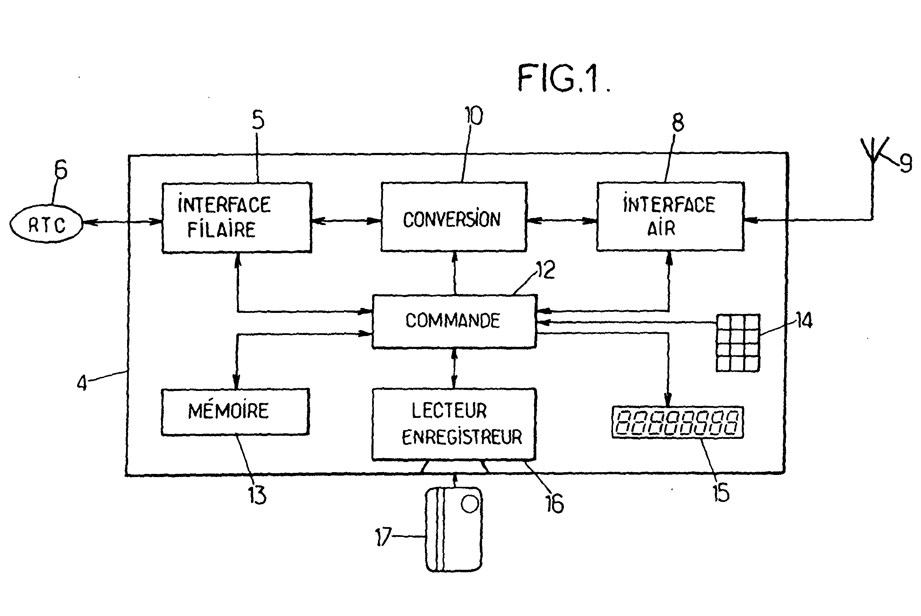

La figure 1 montre un équipement téléphonique 4 constituant une station de base privée pour un abonné d'un réseau de radiotéléphonie cellulaire. Cette station est installée au domicile de l'abonné, ou plus généralement dans une zone dans laquelle il souhaite obtenir une couverture radio privée.

L'équipement 4 comporte une interface filaire 5 à raccorder à un réseau de télécommunication filaire 6, tel que par exemple un réseau téléphonique commuté analogique. L'interface 5 fonctionne de façon classique selon les protocoles du réseau filaire 6.

L'équipement 4 comporte en outre une interface air 8 reliée à l'antenne d'émission/réception 9. La portée radio de l'équipement est typiquement celle d'un téléphone sans cordon classique (inférieure à 300 mètres).

Dans l'exemple particulier considéré à titre d'illustration, l'interface air 8 fonctionne conformément au système de radiotéléphonie européen GSM utilisé dans de nombreux réseaux cellulaires.

En particulier, l'interface 8 constitue un canal de diffusion commun (BCCH) à une certaine fréquence balise d'émission. Cette fréquence peut être affectée à l'équipement par l'opérateur du réseau cellulaire local, ou elle peut être déterminée automatiquement par l'équipement parmi une bande de fréquences allouée à ce réseau. Pour cette détermination, l'interface 8 peut notamment écouter les fréquences de la bande allouée au réseau et choisir celle sur laquelle la puissance captée est la plus faible, afin de minimiser les interférences.

Sur le canal BCCH, la station de base privée 4 émet un signal de balise qui transmet notamment un code d'identification de réseau cellulaire. Ce code permet habituellement aux stations mobiles de distinguer différents réseaux du même type (GSM dans le cas présent) pouvant coexister dans certaines zones. Dans la présente application, ce code, noté PLMNC, identifie un réseau privé formé d'une seule cellule correspondant à la couverture de l'équipement 4.

Les stations mobiles fonctionnant avec l'équipement 4 sont adaptées pour accéder à ce réseau privé de façon préférentielle par rapport aux autres réseaux cellulaires du même type.

Cette adaptation peut être réalisée simplement par un mécanisme de sélection automatique de réseau tel que celui décrit dans la norme GSM 03.22 : « European digital cellular telecommunications system (Phase 2) ; Functions related to Mobile Station (MS) in idle mode », European Telecommunications Standards Institute, Sophia Antipolis, France, Novembre 1994, ETS 300 535. A la mise en marche d'une station mobile préalablement inscrite auprès de l'équipement 4, cette station recherche le réseau privé correspondant à cet équipement. Si ce réseau privé est introuvable (la station mobile est hors de portée de l'équipement 4), alors la station mobile tente d'accéder à son réseau cellulaire de rattachement (home PLMN) ou à un autre réseau cellulaire. Lorsqu'une station mobile est desservie par son réseau cellulaire de rattachement, elle vérifie périodiquement si elle détecte la présence du signal de balise de l'équipement 4. Si ce signal est détecté, la station mobile tente d'accéder au réseau privé. Lorsque ce signal est perdu, la station mobile émet une requête de mise à jour de localisation vers son réseau cellulaire de rattachement.

Les stations mobiles GSM fonctionnent en association avec un module amovible d'identification d'abonné (carte SIM) qui porte toutes les données spécifiques à l'abonnement. Ce module mémorise notamment l'identité internationale d'abonné mobile (IMSI), ainsi que la clé individuelle d'authentification Kᵢ associée.

L'équipement 4 représenté sur la figure 1 comporte une unité de conversion 10 entre les interfaces 5 et 8. Cette unité 10 assure les diverses opérations de conversion analogique-numérique, ou numérique-analogique, de codage/décodage de parole et de mise en forme des trames de signal, requises pour faire communiquer les interfaces 5 et 8. Une unité de commande 12 intercepte les messages de signalisation reçus sur les interfaces 5 et 8, et commande de façon appropriée ces interfaces 5, 8 et l'unité de conversion 10.

L'unité de commande 12 est reliée à une mémoire 13 ainsi qu'à une interface utilisateur comprenant par exemple un clavier 14 et un écran d'affichage 15. Elle est d'autre part reliée à un lecteur/enregistreur de données 16 prévu pour recevoir une carte SIM 17.

Le lecteur/enregistreur 16 sert à échanger certains paramètres avec la carte SIM 17 dans le cadre d'une procédure d'inscription d'abonné auprès de l'équipement 4. Certains paramètres, en particulier l'identité d'abonné mobile IMSI, sont lus sur la carte SIM et stockés dans la mémoire 13, tandis que d'autres paramètres, en particulier le code de réseau PLMNC affecté à l'équipement 4, sont écrits dans une zone de mémoire disponible de la carte SIM 17.

Pour affecter certains paramètres à la station de base privée 4, le lecteur/enregistreur 16 peut être prévu pour recevoir un autre support de données amovible, dit module ou carte de personnalisation, contenant les paramètres qui seront indiqués ci-après. Ce module de personnalisation a le même format qu'une carte SIM. Il comprend une zone de stockage, par exemple magnétique, mais ce n'est pas nécessairement une carte à puce.

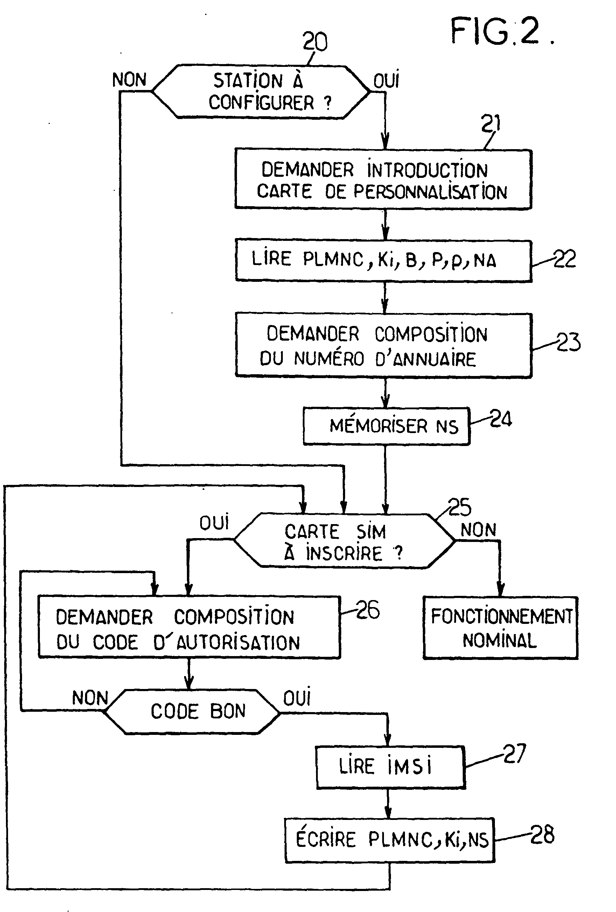

Une procédure de configuration de la station de base privée 4 et d'une carte SIM est représentée à titre d'exemple sur la figure 2.

Dans une étape initiale, l'unité de commande 12 détermine si la station 4 doit être configurée (étape 20). Tel est le cas par exemple à la mise en service de la station 4, ou en réponse à une commande de configuration entrée par l'utilisateur à l'aide du clavier 14. Dans ce cas, l'utilisateur est invité à introduire sa carte de personnalisation dans le lecteur/enregistreur 16, par un message délivré sur l'afficheur 15 (étape 21). Après introduction de cette carte de personnalisation dans le lecteur 16, l'unité 12 commande la lecture des paramètres suivants stockés sur cette carte, et leur écriture dans la mémoire 13 (étape 22) :
- code de réseau PLMNC affecté à la station de base privée 4 ;
- clé privée d'authentification Kᵢ affectée spécifiquement aux authentifications et chiffrements effectués à l'intérieur du réseau privé,
- indication B de la bande de fréquences utilisable pour les signaux radio au sein du réseau privé ;
- puissance d'émission P autorisée pour l'interface air pour les signaux radio au sein du réseau privé notamment pour le signal de balise ;
- rapport cyclique ρ d'émission du signal de balise sur le canal BCCH ; étant donné que le système GSM est à accès multiple par répartition dans le temps (TDMA), avec subdivision de chaque trame TDMA en *N*=8 intervalles de temps successifs pouvant être affectés à des émissions/réceptions différentes, et que le réseau privé ne comporte pas d'autre cellule à surveiller par les stations mobiles, le signal de balise peut être émis pendant *n* intervalles de temps sur *N* (1≤*n*≤*N*), ce qui donne ρ=*n*/*N* ;
- code secret NA d'autorisation d'inscription d'un module d'identification d'abonné auprès de la station de base privée 4.

Ces paramètres portés par la carte de personnalisation sont définis par l'opérateur du réseau de rattachement de l'abonné, en fonction de l'architecture et des caractéristiques de ce réseau.

En variante, plutôt que de lire les valeurs de ces paramètres sur une carte amovible de personnalisation, l'unité de commande 12 pourrait les obtenir en exécutant un programme de téléchargement pour interroger, par l'intermédiaire de l'interface 5, un serveur relié au réseau filaire 6 et contrôlé par l'opérateur du réseau cellulaire, dans lequel seraient mémorisés les paramètres en question.

A l'étape 23, l'utilisateur est invité à composer sur le clavier 14 le numéro d'annuaire de la ligne du réseau filaire 6 à laquelle est raccordé l'équipement. Après saisie et validation, ce numéro NS est enregistré dans la mémoire 13 à l'étape 24.

Le détenteur de la station de base privée pourrait également avoir le choix du code secret d'autorisation NA, qui serait alors saisi sur le clavier 14 plutôt que d'être lu dans une carte de personnalisation ou téléchargé.

Une fois que la station 4 est configurée, l'unité de commande 12 détermine à l'étape 25 si une carte SIM présente dans le lecteur 16 doit être inscrite auprès de la station de base privée 4, l'utilisateur ayant par exemple entré une commande d'inscription par le clavier 14. La première étape 26 de cette inscription consiste à demander à l'utilisateur la composition du code NA d'autorisation d'inscription. Lorsque l'utilisateur compose le bon code sur le clavier 14, l'unité 12 commande la lecture dans la mémoire de la carte 17 de l'identité mobile IMSI de l'abonné et l'écriture de cette identité dans sa mémoire 13 (étape 27). A l'étape 28, elle commande ensuite l'écriture, dans une zone disponible de la mémoire de la carte SIM 17, des paramètres PLMNC et Kᵢ qui ont été obtenus à l'étape 22 ainsi que du numéro d'annuaire NS.

Plusieurs cartes SIM peuvent être inscrites de cette façon auprès de la station de base 4.

Une fois cette inscription terminée, la station de base privée 4 entre dans son mode de fonctionnement nominal.

En particulier, elle prend en considération les paramètres B, P, ρ obtenus à l'étape 22 de la configuration, en émettant le signal de balise avec la puissance maximum P et le rapport cyclique p sur un canal de type BCCH dont la fréquence est choisie dans la bande B de la manière précédemment indiquée. La carte SIM 17 est retirée du lecteur 16 et réintroduite dans celui de la station mobile. A sa mise en service, celle-ci s'initialise en privilégiant le réseau privé.

Lorsque la station de base privée 4 détecte une requête d'accès d'une station mobile (canal d'accès aléatoire RACH), elle établit un canal de signalisation, et elle obtient du mobile son identité IMSI. Elle vérifie alors que cet IMSI est bien enregistré dans sa mémoire 13. Cette vérification évite les éventuels problèmes de conflit entre deux stations de base privées voisines qui auraient le même code de réseau PLMNC.

Si la vérification est négative, l'accès au réseau privé est refusé à la station mobile. Sinon, l'équipement 4 procède à l'authentification de la station mobile de façon semblable à ce qui est normalisé dans le cadre du GSM, mais à l'aide de la clé privée Kᵢ. Elle génère un nombre aléatoire R qu'elle communique à la station mobile, et elle calcule une autre clé S en fonction de R et Kᵢ au moyen d'un algorithme confidentiel. La station mobile recevant le nombre R procède au même calcul avec la clé Kᵢ qui a été mémorisée dans la carte SIM à l'étape 28, et retourne le résultat S à la station 4. En cas de concordance avec la clé S calculée par la station 4, l'accès est autorisé.

Une fois que l'accès a été autorisé, la station mobile active automatiquement, vis-à-vis de son registre de localisation nominal (HLR) du réseau cellulaire, un service de renvoi d'appel vers le numéro d'annuaire NS qui a été enregistré dans la carte SIM. Ainsi, tout appel destiné à l'abonné mobile sera acheminé vers l'équipement 4 par l'intermédiaire de sa ligne de raccordement au réseau filaire 6. En variante, le service de renvoi d'appel pourrait être activé par la station de base privée 4 par l'intermédiaire du réseau filaire 6 et d'une interface appropriée entre ce dernier et le HLR.

Lors de l'établissement d'un appel mettant en jeu la station mobile (appelante ou appelée), celle-ci calcule une clé de chiffrement à l'aide de la clé secrète Kᵢ, d'un nombre aléatoire et d'un autre algorithme confidentiel. La même clé de chiffrement est calculée par la station 4, et utilisée pour chiffrer les communications radio. L'appel se déroule ensuite comme un appel du réseau filaire, par l'intermédiaire des interfaces 5 et 8 et de l'unité de conversion 10, la station mobile étant utilisée de façon semblable à un téléphone sans cordon.

Lorsque la station mobile perd la liaison radio avec l'équipement 4, elle effectue automatiquement une procédure de mise à jour de localisation auprès de son réseau de rattachement. Cette station mobile ou la station de base 4 commande en outre une désactivation du service de renvoi d'appel.

On peut noter qu'un transfert automatique (handover) entre la station de base privée et une station de base du réseau cellulaire est impossible. En revanche il peut être prévu que l'interface air 8 supporte un mécanisme de transfert automatique intracellulaire.

D'autre part, l'interface air 8 peut mettre en oeuvre d'autres mécanismes prévus dans le système cellulaire, tels que par exemple le saut de fréquences.

En général, il sera avantageux de prendre le rapport cyclique p d'émission du signal de balise égal à 1/*N*, afin de limiter les interférences avec les stations de base du réseau cellulaire et les autres stations privées, ce rapport p n'étant pas obligatoirement programmable. Le canal BCCH portant le signal de balise occupe alors, dans les trames TDMA, un intervalle de temps sur N=8. Cet intervalle de temps peut être choisi par la station privée comme la fréquence balise, à l'aide d'une procédure d'écoute, de façon à minimiser les interférences avec l'environnement radio.

Pendant une communication mettant en jeu une station mobile par l'intermédiaire du réseau filaire 6, l'unité 12 commande l'interface air 8 pour qu'elle interrompe l'émission du signal de balise.

L'interface 8 peut notamment allouer à la liaison radio descendante le canal physique auparavant occupé par le signal de balise, c'est-à-dire l'intervalle de temps TDMA affecté au BCCH sur la fréquence balise.

Chaque autre station mobile dont la carte SIM a été inscrite et qui se trouve à portée de la station 4 perd alors la détection du signal de balise, et se localise spontanément auprès de son réseau cellulaire de rattachement, de sorte qu'elle reste parfaitement capable de communiquer, via le réseau cellulaire, en dépit de l'occupation de la ligne filaire. Dès que la communication se termine, le signal de balise est rétabli, et cette autre station, si elle est toujours à portée de l'équipement, tente de nouveau d'accéder au réseau privé.

## Revendications

1. Equipement téléphonique, comprenant une interface filaire (5) pour le raccordement à un réseau de télécommunication filaire (6), et une interface air (8) pour communiquer par radio avec des stations mobiles selon le mode de fonctionnement d'un type de réseaux cellulaires, chaque station mobile fonctionnant en association avec un module amovible d'identification d'abonné contenant des paramètres, propres à l'abonné détenteur de la station mobile, utilisés dans l'établissement et/ou le déroulement des communications radio, **caractérisé en ce qu'**il comprend en outre un lecteur/enregistreur de données (16) agencé pour recevoir un module d'identification d'abonné (17), pour y lire au moins un des paramètres propres à l'abonné et pour y écrire d'autres paramètres dépendant de l'équipement, et des moyens pour stocker certains au moins des paramètres lus par le lecteur/enregistreur de données dans une mémoire (13), de façon à ce que des communications téléphoniques mettant en jeu une station mobile située à portée radio de l'équipement (4) et associée à un module d'identification qui a été préalablement reçu dans le lecteur/enregistreur de données puissent être établies par l'intermédiaire du réseau filaire au moyen de l'interface filaire et de l'interface air.

2. Equipement selon la revendication 1, dans lequel le lecteur/enregistreur de données (16) est agencé pour lire, dans le module d'identification d'abonné (17) reçu dans le lecteur/enregistreur de données (16), parmi les paramètres propres à l'abonné, une identité d'abonné mobile (IMSI).

3. Equipement selon l'une quelconque des revendications précédentes, dans lequel le lecteur/enregistreur de données (16) est agencé pour écrire, dans le module d'identification d'abonné (17) reçu dans le lecteur/enregistreur de données (16), parmi les paramètres dépendant de l'équipement (4), une clé (Kᵢ) d'authentification de la station mobile et/ou de chiffrement des communications radio.

4. Equipement selon l'une quelconque des revendications précédentes, dans lequel le lecteur/enregistreur de données (16) est agencé pour écrire, dans le module d'identification d'abonné (17) reçu dans le lecteur/enregistreur de données (16), parmi les paramètres dépendant de l'équipement (4), un code d'identification de réseau (PLMNC), une station mobile associée audit module d'identification étant agencée pour accéder à un réseau privé, constitué par l'équipement auquel est affecté ledit code d'identification de réseau, de façon préférentielle par rapport aux autres réseaux cellulaires.

5. Equipement selon l'une quelconque des revendications précédentes, dans lequel le lecteur/enregistreur (16) est en outre prévu pour recevoir un module de personnalisation et y lire une partie au moins des paramètres (PLMNC, Kᵢ) dépendant de l'équipement qui sont ensuite écrits dans un module d'identification (17) reçu dans le lecteur/enregistreur (16).

6. Equipement selon la revendication 5, dans lequel le lecteur/enregistreur (16) est agencé pour lire des paramètres supplémentaires (B, P, ρ, NA) dans le module de personnalisation.

7. Equipement selon l'une quelconque des revendications précédentes, comprenant en outre des moyens de téléchargement pour obtenir, depuis un serveur relié au réseau filaire (6), une partie au moins des paramètres (PLMNC, Kᵢ) dépendant de l'équipement qui sont ensuite écrits dans un module d'identification (17) reçu dans le lecteur/enregistreur (16).

8. Equipement selon la revendication 7, dans lequel les moyens de téléchargement sont agencés pour obtenir des paramètres supplémentaires (B, P, p, NA) depuis le serveur.

9. Equipement selon la revendication 6 ou 8, dans lequel lesdits paramètres supplémentaires comprennent un code secret (NA) d'autorisation d'inscription d'un module d'identification d'abonné, dont la composition est demandée ultérieurement pour autoriser des lectures et écritures dans une mémoire d'un module d'identification d'abonné reçu dans le lecteur/enregistreur.

10. Equipement selon la revendication 6 ou 8, dans lequel lesdits paramètres supplémentaires comprennent une indication (B) d'une bande de fréquences autorisée pour l'interface air (8).

11. Equipement selon la revendication 6 ou 8, dans lequel lesdits paramètres supplémentaires comprennent une puissance d'émission (P) autorisée pour l'interface air.

12. Equipement selon la revendication 6 ou 8, dans lequel lesdits paramètres supplémentaires comprennent un rapport cyclique (p) d'émission d'un signal de balise par l'interface air (8).

13. Equipement selon l'une quelconque des revendications précédentes, dans lequel l'interface air (8) est agencée pour émettre un signal de balise conformément au mode de fonctionnement du type de réseaux cellulaires, permettant sa détection par une station mobile située à portée radio de l'équipement (4), et pour cesser d'émettre le signal de balise pendant une communication établie par l'intermédiaire du réseau filaire et mettant en jeu une station mobile.

14. Equipement selon la revendication 13, dans lequel l'interface air (8) est agencée pour occuper le canal physique du signal de balise pendant la communication mettant en jeu ladite station mobile.

15. Equipement selon la revendication 13 ou 14, dans lequel ledit type de réseaux cellulaires est à accès multiple par répartition dans le temps, avec des trames de signal divisées chacune en plusieurs intervalles de temps successifs, et dans lequel l'interface air (8) émet le signal de balise pendant un intervalle de temps par trame sur une fréquence balise, et n'émet aucun signal pendant les autres intervalles de temps sur la fréquence balise.

16. Procédé de contrôle de communications mettant en jeu au moins une station et un équipement de communication, l'équipement de communication comprenant une interface (5) pour le raccordement à un réseau de télécommunication (6), et une interface (8) pour communiquer avec la station, la station fonctionnant en association avec un module d'identification d'abonné apte à contenir des paramètres, propres à l'abonné détenteur de la station, utilisés dans l'établissement et/ou le déroulement des communications, le procédé comprenant les étapes suivantes :
- l'équipement de communication écrit, dans un module d'identification d'abonné (17), au moins une clé d'authentification de la station associée audit module d'identification d'abonné ;
- on authentifie la station associée audit module d'identification d'abonné et/ou on chiffre des communications avec ladite station, à partir de la clé d'authentification écrite dans ledit module d'identification d'abonné et/ou d'une clé de chiffrement calculée à partir de ladite clé d'authentification, l'authentification et/ou le chiffrement étant effectués au niveau de l'équipement de communication, et
- on effectue une communication entre la station et l'équipement de communication selon le résultat de l'authentification et/ou du chiffrement.

## Patentansprüche

1. Telefoneinrichtung, umfassend eine Drahtschnittstelle (5) für die Verbindung mit einem Draht-Telekommunikationsnetz (6) und eine Luftschnittstelle (8) für die Funkverbindung mit mobilen Stationen gemäß der Arbeitsweise eines Funktelefonnetztyps, wobei jede mobile Station in Kombination mit einem lösbaren Teilnehmeridentifizierungsmodul arbeitet, das Parameter enthält, die dem Teilnehmer, der Inhaber der mobilen Station ist, zugeordnet sind und die bei der Herstellung und/oder der Abwicklung der Funkverbindungen verwendet werden, **dadurch gekennzeichnet, dass** sie außerdem ein Daten-Lese/Schreibgerät (16) umfasst, das dafür ausgelegt ist, ein Teilnehmeridentifizierungsmodul (17) aufzunehmen, um von diesem mindestens einen der dem Teilnehmer zugeordneten Parameter zu lesen und um in dieses andere, von der Einrichtung abhängige Parameter zu schreiben, sowie Mittel zum Speichern von mindestens manchen der von dem Daten-Lese/Schreibgerät gelesenen Parameter in einem Speicher (13), so dass Fernsprechverbindungen mit einer mobilen Station, die in Funkreichweite der Einrichtung (4) gelegen ist und die einem Identifizierungsmodul zugeordnet ist, das zuvor in das Lese/Schreibgerät eingeführt worden war, über das Drahtnetz mit Hilfe der Drahtschnittstelle und der Luftschnittstelle hergestellt werden können.

2. Einrichtung nach Anspruch 1, bei der das Daten-Lese/Schreibgerät (16) dafür ausgelegt ist, in dem in das Daten-Lese/Schreibgerät (16) eingeführten Teilnehmeridentifizierungsmodul (17) aus den dem Teilnehmer zugeordneten Parametern eine Mobilteilnehmeridentität (IMSI) zu lesen.

3. Einrichtung nach einem der vorhergehenden Ansprüche, bei der Daten-Lese/Schreibgerät (16) dafür ausgelegt ist, in das in das Daten-Lese/Schreibgerät (16) eingeführte Teilnehmeridentifizierungsmodul (17) aus den von der Einrichtung (4) abhängigen Parametern einen Schlüssel (Kᵢ) zur Authentifizierung der mobilen Station und/oder zur Chiffrierung der Funkverbindungen zu schreiben.

4. Einrichtung nach einem der vorhergehenden Ansprüche, bei der das Daten-Lese/Schreibgerät (16) dafür ausgelegt ist, in das in das Daten-Lese/Schreibgerät (16) eingeführte Teilnehmeridentifizierungsmodul (17) aus den von der Einrichtung (4) abhängigen Parametern einen Netzidentifizierungscode (PLMNC) zu schreiben, wobei eine diesem Identifizierungsmodul zugeordnete mobile Station dafür ausgelegt ist, auf ein Privatnetz, das aus der Einrichtung besteht, der dieser Netzidentifizierungscode zugewiesen ist, gegenüber den anderen Funktelefonnetzen bevorzugt zuzugreifen.

5. Einrichtung nach einem der vorhergehenden Ansprüche, bei der das Lese/Schreibgerät (16) außerdem dafür vorgesehen ist, ein Personalisierungsmodul aufzunehmen und von diesem mindestens einen Teil der von der Einrichtung abhängigen Parameter (PLMNC, Kᵢ) zu lesen, die dann in ein in das Lese/Schreibgerät (16) eingeführtes Identifizierungsmodul (17) geschrieben werden.

6. Einrichtung nach Anspruch 5, bei der das Lese/Schreibgerät (16) dafür ausgelegt ist, zusätzliche Parameter (B, P, p, NA) in dem Personalisierungsmodul zu lesen.

7. Einrichtung nach einem der vorhergehenden Ansprüche, umfassend außerdem Fernlademittel, um von einem mit dem Drahtnetz (6) verbundenen Server mindestens einen Teil der von der Einrichtung abhängigen Parameter (PLMNC, Kᵢ) zu erhalten, die dann in ein in das Lese/Schreibgerät (16) eingeführtes Identifizierungsmodul (17) geschrieben werden.

8. Einrichtung nach Anspruch 7, bei der die Fernlademittel dafür ausgelegt sind, von dem Server zusätzliche Parameter (B, P, p, NA) zu erhalten.

9. Einrichtung nach Anspruch 6 oder 8, bei der die zusätzlichen Parameter einen geheimen Code (NA) für die Zulassung des Schreibens in ein Teilnehmeridentifizierungsmodul umfassen, dessen Eingabe später verlangt wird, um das Lesen und Schreiben in einem Speicher eines in das Lese/Schreibgerät eingeführten Teilnehmeridentifizierungsmoduls zuzulassen.

10. Einrichtung nach Anspruch 6 oder 8, bei der die zusätzlichen Parameter eine Angabe (B) eines für die Luftschnittstelle (8) zugelassenen Frequenzbandes umfassen.

11. Einrichtung nach Anspruch 6 oder 8, bei der die zusätzlichen Parameter eine für die Luftschnittstelle zugelassene Sendeleistung (P) umfassen.

12. Einrichtung nach Anspruch 6 oder 8, bei der die zusätzlichen Parameter ein Zyklusverhältnis (p) der Sendung eines Pilotsignals durch die Luftschnittstelle (8) umfassen.

13. Einrichtung nach einem der vorhergehenden Ansprüche, bei der die Luftschnittstelle (8) dafür ausgelegt ist, ein Pilotsignal gemäß der Arbeitsweise des Funktelefonnetztyps zu senden, das ihre Erfassung durch eine in Funkreichweite der Einrichtung (4) gelegene mobile Station gestattet, und die Sendung des Pilotsignals während einer über das Drahtnetz hergestellten Verbindung mit einer mobilen Station einzustellen.

14. Einrichtung nach Anspruch 13, bei der die Luftschnittstelle (8) dafür ausgelegt ist, während der Verbindung mit dieser mobilen Station den physischen Kanal des Pilotsignals zu besetzen.

15. Einrichtung nach Anspruch 13 oder 14, bei der dieser Funktelefonnetztyp mit Mehrfachzugriff im Zeitmultiplex mit Signalblöcken ist, die jeweils in mehrere aufeinanderfolgende Zeitintervalle geteilt sind, und bei der die Luftschnittstelle (8) das Pilotsignal während eines Zeitintervalls pro Block auf einer Pilotfrequenz sendet und während der anderen Zeitintervalle auf der Pilotfrequenz kein Signal sendet.

16. Verfahren zur Verbindungssteuerung unter Verwendung von mindestens einer Station und einer Verbindungseinrichtung, wobei die Verbindungseinrichtung eine Schnittstelle (5) für die Verbindung mit einem Telekommunikationsnetz (6) und eine Schnittstelle (8) zur Verbindung mit der Station umfasst, wobei die Station in Kombination mit einem Teilnehmeridentifizierungsmodul arbeitet, das Parameter enthalten kann, die dem Teilnehmer, der Inhaber der Station ist, zugeordnet sind und die bei der Herstellung und/oder der Abwicklung der Verbindungen verwendet werden, wobei das Verfahren die folgenden Schritte umfasst:
- die Verbindungseinrichtung schreibt in ein Teilnehmeridentifizierungsmodul (17) mindestens einen Schlüssel zur Authentifizierung der dem Teilnehmeridentifizierungsmodul zugeordneten Station;
- man authentifiziert die dem Teilnehmeridentifizierungsmodul zugeordnete Station und/oder man chiffriert Verbindungen mit dieser Station aus dem in das Teilnehmeridentifizierungsmodul geschriebenen Authentifizierungsschlüssel und/oder aus einem Chiffrierschlüssel, der aus dem Authentifizierungschlüssel errechnet wird, wobei die Authentifizierung und/oder die Chiffrierung auf Höhe der Verbindungseinrichtung vorgenommen werden, und
- man führt eine Verbindung zwischen der Station und der Verbindungseinrichtung gemäß dem Ergebnis der Authentifizierung und/oder der Chiffrierung aus.

## Claims

1. Telephone equipment comprising a wire interface (5) for connection to a wire-line telecommunication network (6) and an air interface (8) for communicating by radio with mobile stations in accordance with an operating mode of one type of cellular networks, each mobile station operating in conjunction with a plug-in subscriber identity module containing parameters specific to the subscriber holding the mobile station and used to set up and/or operate radio calls, **characterised in that** it further comprises a data reader/recorder (16) capable of receiving a subscriber identity module (17), reading therefrom at least one of the parameters specific to the subscriber and writing thereto other parameters dependent on the equipment, and means for storing at least some of the parameters read by the data reader/recorder in a memory (13), so that telephone calls involving a mobile station located within range of the equipment (4) and associated with an identity module that was previously inserted in the data reader/recorder can be set up via the wire-line network by means of the wire interface and the air interface.

2. Equipment according to claim 1, wherein the data reader/recorder (16) is capable of reading, in the subscriber identity module (17) inserted in the data reader/recorder (16), among the parameters specific to the subscriber, a mobile subscriber identity (IMSI).

3. Equipment according to any one of the preceding claims, wherein the data reader/recorder (16) is capable of reading, in the subscriber identity module (17) inserted in the data reader/recorder (16), among the parameters dependent on the equipment (4), a key (Kᵢ) for authenticating the mobile station and/or encrypting radio communications.

4. Equipment according to any one of the preceding claims, wherein the data reader/recorder (16) is capable of writing, in the subscriber identity module (17) inserted in the data reader/recorder (16), among the parameters dependent on the equipment (4), a network identity code (PLMNC), a mobile station associated with said identification module being arranged to access a private network consisting of the equipment, to which said network identity code is assigned, in preference to other cellular networks.

5. Equipment according to any one of the preceding claims, wherein the reader/recorder (16) is further arranged to receive a customisation module and read therefrom at least part of the parameters (PLMNC, Kᵢ) dependent on the equipment which are then written to an identity module (17) inserted in the reader/recorder (16).

6. Equipment according to claim 5, wherein the reader/recorder (16) is arranged to read additional parameters (B, P, p, NA) in the customisation module.

7. Equipment according to any one of the preceding claims, further comprising downloading means for obtaining, from a server connected to the wire-line network (6), at least part of the parameters dependent on the equipment (PLMNC, Kᵢ) which are then written to an identity module (17) inserted in the reader/recorder (16).

8. Equipment according to claim 7, wherein the downloading means are arranged to obtain additional parameters (B, P, p, NA) from the server.

9. Equipment according to claim 6 or 8, wherein said additional parameters include a secret authorisation code (NA) for registering a subscriber identity module, the dialling of which is requested subsequently in order to authorise read and write operations in a memory of a subscriber identity module inserted in the reader/recorder.

10. Equipment according to claim 6 or 8, wherein said additional parameters include an indication (B) of an authorised frequency band for the air interface (8).

11. Equipment according to claim 6 or 8, wherein said additional parameters include an authorised transmission power (P) for the air interface.

12. Equipment according to claim 6 or 8, wherein said additional parameters include a duty cycle (p) for transmission of a beacon signal by the air interface (8).

13. Equipment according to any one of the preceding claims, wherein the air interface (8) is arranged to transmit a beacon signal in accordance with the operating mode of the type of cellular network, so that it can be detected by a mobile station located within radio range of the equipment (4) and to cease transmitting the beacon signal during a call set up via the wire-line network and involving a mobile station.

14. Equipment according to claim 13, wherein the air interface (8) is arranged to occupy the physical channel of the beacon signal during the call using said mobile station.

15. Equipment according to claim 13 or 14, wherein said type of cellular network uses time division multiple access, with signal frames each divided into several successive timeslots and wherein the air interface (8) transmits the beacon signal during one timeslot per frame on a beacon frequency and does not transmit a signal during the other timeslots on the beacon frequency.

16. Method for controlling communications involving at least one station and a communication equipment, the communication equipment comprising an interface (5) for connection to a telecommunication network (6), and an interface (8) for communicating with the station, the station operating in conjunction with a subscriber identity module capable of containing parameters, specific to the subscriber holding the station and used to set up and/or operate communications, the method comprising the following steps:
- the communication equipment writes, in a subscriber identity module (17), at least one key for authenticating the station operating in conjunction with said subscriber identity module;
- the station operating in conjunction with said subscriber identity module is authenticated and/or communications with said station are encrypted, using the authentication key written in said subscriber identity module and/or a encryption key calculated from said authentication key, the authentication and/or the encryption being carried out at the communication equipment level; and
- a communication between the station and the communication equipment is performed according to the result of the authentication and/or the encryption.
